(19) **Europäisches Patentamt European Patent Office Office européen des brevets**

(11) **EP 4 718 703 A1**

(12) **EUROPEAN PATENT APPLICATION**

(43) Date of publication:
01.04.2026 Bulletin 2026/14

(21) Application number: 25204678.4

(22) Date of filing: 25.09.2025

(51) International Patent Classification (IPC):
$H02M\ 5/275^{(2006.01)}$  $H02M\ 5/293^{(2006.01)}$
$H02M\ 1/04^{(2006.01)}$  $H02M\ 1/08^{(2006.01)}$
$H02M\ 1/12^{(2006.01)}$

(52) Cooperative Patent Classification (CPC):
H02M 5/275; H02M 5/2932; H02M 1/047;
H02M 1/083; H02M 1/126

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.09.2024 US 202463699533 P

(71) Applicant: Delta Electronics, Inc.
Neihu, Taipei 11491 (TW)

(72) Inventors:
• Li, Haiguo
Morrisville, NC 27560 (US)

• Wang, Ruxi
Morrisville, NC 27560 (US)
• Barbosa, Peter Mantovanelli
Morrisville, NC 27560 (US)
• Zhu, Charles Lizhi
Plymouth Charter Twp, MI 48170 (US)
• Yang, Cheng-Chang
Taoyuan City 320023 (TW)

(74) Representative: Uexküll & Stolberg
Partnerschaft von
Patent- und Rechtsanwälten mbB
Beselerstraße 4
22607 Hamburg (DE)

(54) **AC-AC CONVERTER AND POWER SUPPLY SYSTEM**

(57) An AC-AC converter (1, 1a, 1b, 1c, 1d, 1e, 1f, 1g, 1h, 1i, 1j, 1m, 1n) and a power supply system (9) are provided. The AC-AC converter (1, 1a, 1b, 1c, 1d, 1e, 1f, 1g, 1h, 1i, 1j, 1m, 1n) of the present disclosure includes a first AC terminal (2) with two sub terminals (21, 22), a second AC terminal (3) with three sub terminals (31, 32, 33), and a first bridge arm (4) with two switch assemblies (41, 42). The AC-AC converter (1, 1a, 1b, 1c, 1d, 1e, 1f, 1g, 1h, 1i, 1j, 1m, 1n) receives and converts the input power between two wires and three wires. The two switch assemblies (41, 42) are activated, and bidirectional power flow is allowed. The two switch assemblies (41, 42) are performed as a voltage source for supporting both balanced and unbalanced loads. Both active and reactive power are also supported. Moreover, the AC-AC converter (1, 1a, 1b, 1c, 1d, 1e, 1f, 1g, 1h, 1i, 1j, 1m, 1n) of the present disclosure has the advantages of reducing weight, size and cost, and enhancing conversion efficiency.

FIG. 1

## Description

FIELD OF THE INVENTION

This present disclosure relates to a converter, and more particularly to an AC-AC converter and a power supply system.

BACKGROUND OF THE INVENTION

Certain power source provides an AC power with two wires. When the power source is required to connect with an AC grid with three wires, the AC power with two wires is converted to an AC power with three wires by an AC-AC converter. For example, an electric vehicle battery delivers power through a bidirectional charger. The bidirectional charger output an AC power with two wires. The voltage between the two wires is 240 V. For connecting with a household AC grid with three wires, the AC power of the bidirectional charger is converted to an AC output power to the household AC grid by an AC-AC converter. The conventional AC-AC converter is a transformer with 60 Hz. However, the transformer with 60Hz has drawbacks of increasing size, increasing weight and increasing cost.

Therefore, an AC-AC converter and a power supply system are provided to overcome the drawbacks.

SUMMARY OF THE INVENTION

The present disclosure provides an AC-AC converter and a power supply system. The AC-AC converter of the present disclosure includes a first AC terminal with two sub terminals, a second AC terminal with three sub terminals, and a first bridge arm with two switch assemblies. The AC-AC converter receives and converts the input power between two wires and three wires. The two switch assemblies are activated, and bidirectional power flow is allowed. The two switch assemblies are performed as a voltage source for supporting both balanced and unbalanced loads. Both active and reactive power are also supported. Moreover, the AC-AC converter of the present disclosure has the advantages of reducing weight, size and cost, and enhancing conversion efficiency.

In accordance with an aspect of the present disclosure, an AC-AC converter is provided. The AC-AC converter includes a first AC terminal, a second AC terminal, a first bridge arm, a second bridge arm and at least one inductor. The first AC terminal is configured to receive an input power and includes a first sub terminal and a second sub terminal. The second AC terminal includes a third sub terminal, a fourth sub terminal and a fifth sub terminal. The third sub terminal is connected with the first sub terminal. The fifth sub terminal is connected with the second sub terminal. The first bridge arm is connected between the first sub terminal and the second sub terminal and includes a first switch assembly and a second switch assembly. A connection node is formed between the first switch assembly and the second switch assembly. The connection node is connected with the fourth sub terminal. The second bridge arm includes at least one capacitor connected with the fourth sub terminal. One end of the at least one inductor is connected with at least one of the first switch assembly and the second switch assembly. The other end of the at least one inductor is connected with at least one of the third sub terminal, the fourth sub terminal and the fifth sub terminal. A first output power is formed between the third sub terminal and the fourth sub terminal, and a second output power is formed between the fourth sub terminal and the fifth sub terminal.

In accordance with another aspect of the present disclosure, a power supply system is provided. The power supply system includes an AC power source, a load and an AC-AC converter. The AC power source provides an input power and includes two first wires. The load receives a main output power and includes three second wires. The AC-AC converter is connected between the AC power source and the load, converts the input power of the AC power source to the main output power of the load. The AC-AC converter includes a first AC terminal, a second AC terminal, a first bridge arm, a second bridge arm and at least one inductor. The first AC terminal is configured to receive the input power and includes a first sub terminal and a second sub terminal. The first sub terminal and the second terminal are connected with the two first wires of the AC power source, respectively. The second AC terminal includes a third sub terminal, a fourth sub terminal and a fifth sub terminal. The third sub terminal is connected with the first sub terminal. The fifth sub terminal is connected with the second sub terminal. The third sub terminal, the fourth sub terminal and the fifth sub terminal are connected with the three second wires of the load, respectively. A first output power is formed between the third sub terminal and the fourth sub terminal. A second output power is formed between the fourth sub terminal and the fifth sub terminal. The main output power is formed by the first output power and the second output power collaboratively. The first bridge arm is connected between the first sub terminal and the second sub terminal and includes a first switch assembly and a second switch assembly. A connection node is formed between the first switch assembly and the second switch assembly. The connection node is connected with the fourth sub terminal. The second bridge arm includes at least one capacitor connected with the fourth sub terminal. One end of the at least one inductor is connected with at least one of the first switch assembly and the second switch assembly. The other end of the at least one inductor is connected with at least one of the third sub terminal, the fourth sub terminal and the fifth sub terminal.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 is a schematic circuit view illustrating an AC-AC converter according to a first embodiment of the present disclosure;
FIG. 2 shows waveforms of the input power and operation of the switches of one embodiment of the AC-AC converter of FIG. 1;
FIG. 3 shows waveforms of the input power and operation of the switches of the other embodiment of the AC-AC converter of FIG. 1;
FIG. 4 is a schematic circuit view illustrating an AC-AC converter according to a second embodiment of the present disclosure;
FIG. 5 is a schematic circuit view illustrating an AC-AC converter according to a third embodiment of the present disclosure;
FIG. 6 is a schematic circuit view illustrating an AC-AC converter according to a fourth embodiment of the present disclosure;
FIG. 7 is a schematic circuit view illustrating an AC-AC converter according to a fifth embodiment of the present disclosure;
FIG. 8 is a schematic circuit view illustrating an AC-AC converter according to a sixth embodiment of the present disclosure;
FIG. 9 is a schematic circuit view illustrating an AC-AC converter according to a seventh embodiment of the present disclosure;
FIG. 10 is a schematic circuit view illustrating an AC-AC converter according to an eighth embodiment of the present disclosure;
FIG. 11 is a schematic circuit view illustrating an AC-AC converter according to a ninth embodiment of the present disclosure;
FIG. 12 is a schematic circuit view illustrating an AC-AC converter according to a tenth embodiment of the present disclosure;
FIG. 13 is a schematic circuit view illustrating an AC-AC converter according to an eleventh embodiment of the present disclosure;
FIGS. 14A to 14I are schematic circuit views illustrating the switches of the AC-AC converter of the present disclosure;
FIG. 15 is a schematic circuit view illustrating an AC-AC converter according to a twelfth embodiment of the present disclosure;
FIGS. 16A to 16G are schematic circuit views illustrating the first filter of the AC-AC converter of the present disclosure;
FIGS. 17A to 17D are schematic circuit views illustrating the second filter of the AC-AC converter of the present disclosure;
FIG. 18 is a schematic circuit view illustrating an AC-AC converter according to a thirteenth embodiment of the present disclosure;
FIG. 19 is a schematic circuit view illustrating an AC-AC converter according to a fourteenth embodiment of the present disclosure;
FIG. 20 is a schematic circuit view illustrating a power supply system of the present disclosure;
FIG. 21 is a schematic circuit view illustrating the signal generation device of the power supply system of an embodiment of the present disclosure; and
FIG. 22 is a schematic circuit view illustrating the signal generation device of the power supply system of another embodiment of the present disclosure.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description. It is not intended to be exhaustive or to be limited to the precise form disclosed.

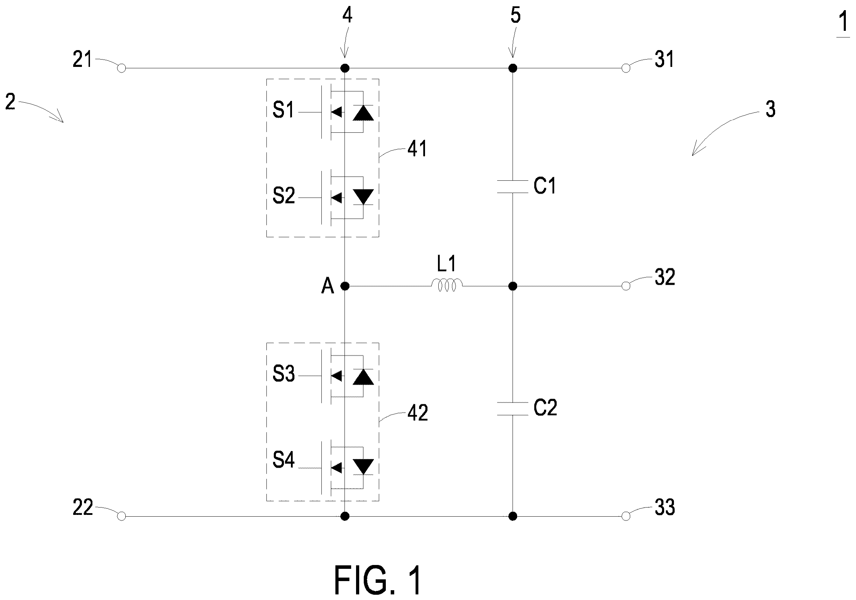

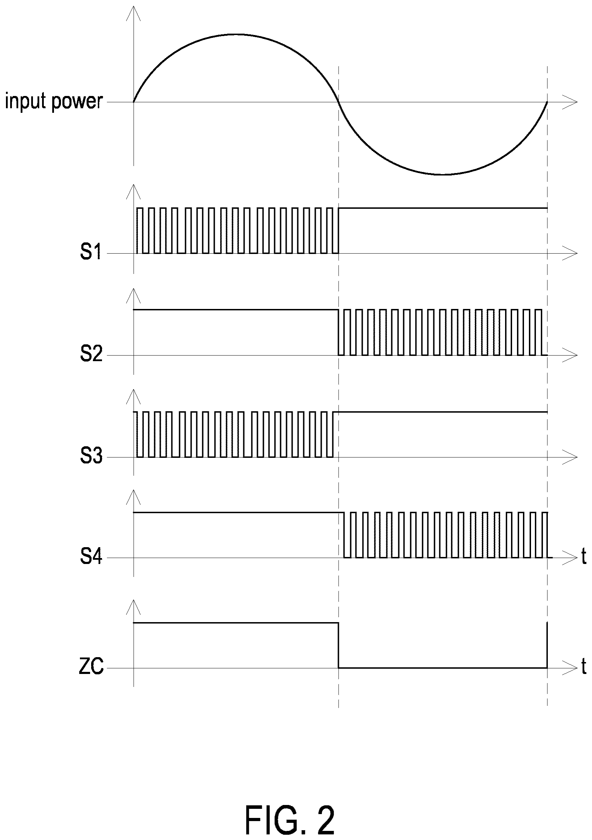

FIG. 1 is a schematic circuit view illustrating an AC-AC converter according to a first embodiment of the present disclosure. FIG. 2 shows waveforms of the input power and operation of the switches of one embodiment of the AC-AC converter of FIG. 1. In this embodiment, the AC-AC converter 1 is connected between an AC power source and a load for converting an input power of the AC power source to a main output power of the load. The connection and the conversion of the AC-AC converter 1 will be described below. As shown in FIG. 1, the AC-AC converter 1 includes a first AC terminal 2, a second AC terminal 3, a first bridge arm 4, a second bridge arm 5, and a first inductor L1.

The first AC terminal 2 is connected with the AC power source to receive the input power. The first AC terminal 2 includes a first sub terminal 21 and a second sub terminal 22. The first AC terminal 2 is connected with the AC power source through the first sub terminal 21 and the second sub terminal 22. In this embodiment, the input AC voltage of the AC power source is 240V.

The second AC terminal 3 is connected with the load to provide the main output power. The second AC terminal 3 includes a third sub terminal 31, a fourth sub terminal 32 and a fifth sub terminal 33. The third sub terminal 31 of the second AC terminal 3 is connected with the first sub terminal 21 of the first AC terminal 2. The fourth sub terminal 32 of the second AC terminal 3 is the neutral terminal and may also be grounded. The fifth sub terminal 33 of the second AC terminal 3 is connected with the second sub terminal 22 of the first AC terminal 2. A first output power of the main output power is formed between the third sub terminal 31 and the fourth sub terminal 32 of the second AC terminal 3. A second output power of the main output power is formed between the fourth sub terminal 32 and the fifth sub terminal 33 of the second AC terminal 3. A third output power of the main output power is formed between the third sub terminal 31 and the fifth sub terminal 33 of the second AC terminal 3. In this embodiment, the first output power and the second output power are half of the input power, respectively, i.e., 120V. The third output power is the same as the input power. In this embodiment, the first output power and the second output power are arbitrary values, and the sum of the first output power and the second output power is 240V.

The first bridge arm 4 is connected between the first sub terminal 21 and the second sub terminal 22 of the first AC terminal 2. The first bridge arm 4 includes a first switch assembly 41 and a second switch assembly 42. A connection node A is formed between the first switch assembly 41 and the second switch assembly 42. In this embodiment, the first switch assembly 41 includes a first switch S1 and a second switch S2. The first switch S1 and the second switch S2 are connected in series to form a bidirectional AC switch. The first switch S1 is connected with the first sub terminal 21 of the first AC terminal 2. The second switch S2 is connected with the connection node A. The second switch assembly 42 includes a third switch S3 and a fourth switch S4. The third switch S3 and the fourth switch S4 are connected in series to form a bidirectional AC switch. The third switch S3 is connected with the connection node A. The fourth switch S4 is connected with the second sub terminal 22 of the first AC terminal 2.

The second bridge arm 5 and the first bridge arm 4 are connected in parallel. In this embodiment, the second bridge arm 5 includes a first capacitor C1 and a second capacitor C2. The first capacitor C1 and the second capacitor C2 are connected in series. The first capacitor C1 is connected between the third sub terminal 31 and the fourth sub terminal 32 of the second AC terminal 3. The second capacitor C2 is connected between the fourth sub terminal 32 and the fifth sub terminal 33 of the second AC terminal 3.

One end of the first inductor L1 is connected with the connection node A between the first switch assembly 41 and the second switch assembly 42. The other end of the first inductor L1 is connection with the fourth sub terminal 32 of the second AC terminal 3.

In one embodiment, the AC-AC converter 1 includes a controller configured to provide a first signal to control the first switch S1, a second signal to control the second switch S2, a third signal to control the third switch S3, and a fourth signal to control the fourth switch S4.

In one embodiment, the first signal for controlling the first switch S1, the second signal for controlling the second switch S2, the third signal for controlling the third switch S3, and the fourth signal for controlling the fourth switch S4 include but not limit to driving signals for driving the first switch S1, the second switch S2, the third switch S3, and the fourth switch S4 respectively.

As shown in FIG. 2, the input power, the operation of the first switch S1, the second switch S2 of the first switch assembly 41, the third switch S3, the fourth switch S4 of the second switch assembly 42 and zero-cross signal ZC are shown in sequence. The first switch S1 is controlled by the first signal. The second switch S2 is controlled by the second signal. The third switch S3 is controlled by the third signal. The fourth switch S4 is controlled by the fourth signal. During a positive half-cycle, the first signal is complementary to the third signal, the second signal and the fourth signal are positive. During a negative half-cycle, the second signal is complementary to the fourth signal, the first signal and the third signal are positive. Namely, during a positive half-cycle of the input power, the first switch S1 and the third switch S3 are controlled by and/or driven with high-frequency switching signals with interleaving. A dead time is provided between the two switches with no overlapping. In the embodiment, in the positive half-cycle, the second switch S2 and the fourth switch S4 are in turn-on state. Conversely, during a negative half-cycle of the input power, the second switch S2 and the fourth switch S4 are controlled by and/or driven with high-frequency switching signals with interleaving. A dead time is provided between the two switches with no overlapping. During a positive half-cycle, the zero-cross signal ZC is positive. During a negative half-cycle, the zero-cross signal ZC is negative. In the embodiment, in the negative half-cycle, the first switch S1 and the third S3 are in turn-on state. In some embodiments, since the second switch S2 and the fourth switch S4 are turned on, the first switch S1 can be turned off before the third switch S3 is turned on. Consequently, the current flows through the diode of the first switch S1 or the diode of the third switch S3 according the direction of the current, and the overvoltage stress of the AC-AC converter 1 is reduced.

In some embodiments, the duty cycle of one of the first switch S1 and the third switch S3 is less than 50% while the other is larger than 50%, and the first switch S1 and the third switch S3 are complementary operating. The duty ratios of the first switch S1 and the third switch S3 would add up to 100%. In some embodiments, the duty cycle of one of the second switch S2 and the fourth switch S4 is less than 50% while the other is larger than 50%, and the second switch S2 and the fourth switch S4 are complementary operating. The duty ratios of the second switch S2 and the fourth switch S4 would add up to 100%.

From above, the AC-AC converter 1 of the present disclosure includes a first AC terminal 2 with two sub terminals 21, 22, a second AC terminal 3 with three sub terminals 31, 32, 33, and a first bridge arm 4 with two switch assemblies 41, 42. The AC-AC converter 1 receives and converts the input power between two wires and three wires. The two switch assemblies 41, 42 are activated, and bidirectional power flow is allowed. The two switch assemblies 41, 42 are performed as a voltage source for supporting both balanced and unbalanced loads. Both active and reactive power are also supported. Moreover, the AC-AC converter 1 of the present disclosure has the advantages of reducing weight, size and cost, and enhancing conversion efficiency.

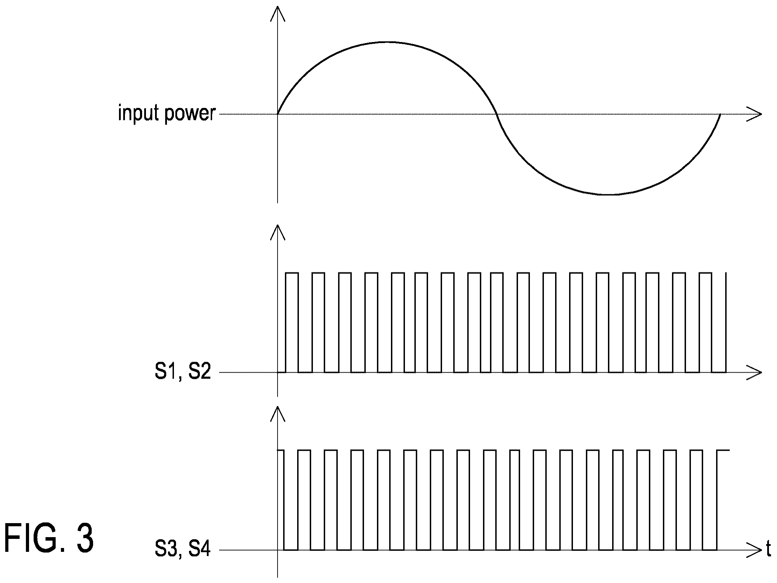

In some embodiments, the operation of the switches can be adjusted according to the practical requirements. FIG. 3 shows waveforms of the input power and operation of the switches of the other embodiment of the AC-AC converter of FIG. 1. As shown in FIG. 3, the first switch S1 and the second switch S2 are controlled and/or driven by a first signal. The third switch S3 and the fourth switch S4 are controlled and/or driven by a second signal. The first signal is complementary to the second signal.

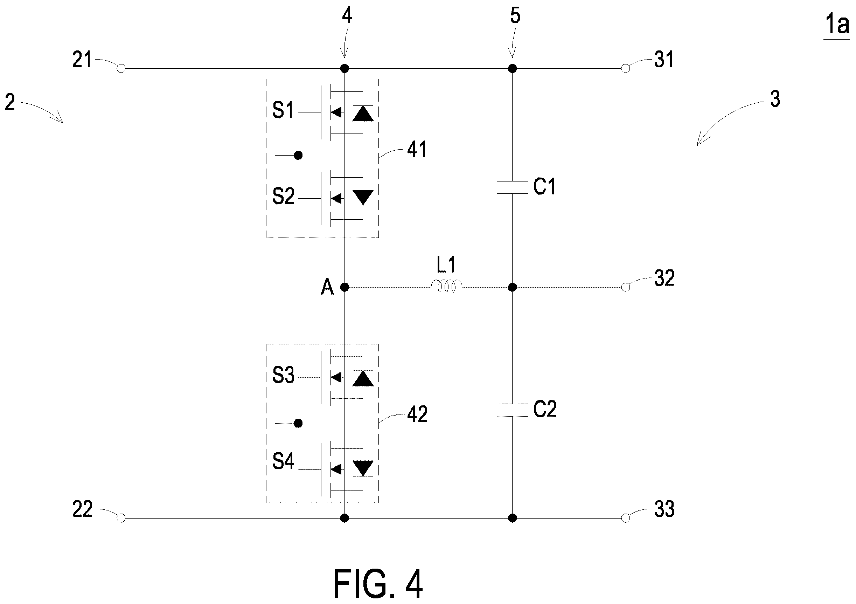

FIG. 4 is a schematic circuit view illustrating an AC-AC converter according to a second embodiment of the present disclosure. Compared with the AC-AC converter 1 of FIG. 1, as shown in FIG. 4, a gate terminal of the first switch S1 and a gate terminal of the second switch S2 of the first switch assembly 41 of the AC-AC converter 1a of this embodiment are connected with each other to form a first bidirectional switch. A gate terminal of the third switch S3 and a gate terminal of the fourth switch S4 of the second switch assembly 42 of the AC-AC converter 1a of this embodiment are connected with each other to form a second bidirectional switch. In this embodiment, the first switch S1 and the second switch S2 of the first switch assembly 41, the third switch S3 and the fourth switch S4 of the second switch assembly 42 are controlled by the operation waveform of FIG. 3.

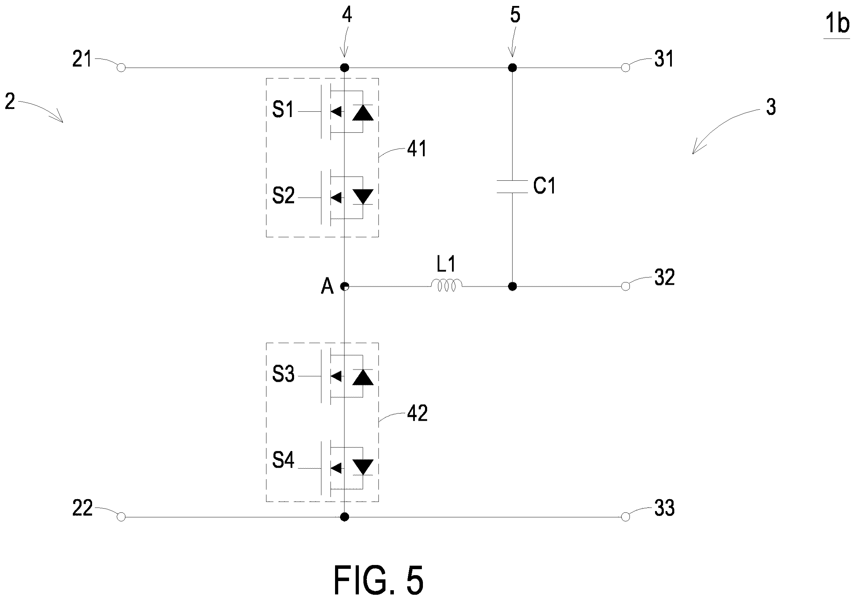

FIG. 5 is a schematic circuit view illustrating an AC-AC converter according to a third embodiment of the present disclosure. Compared with the AC-AC converter 1 of FIG. 1, as shown in FIG. 5, the second bridge arm 5 of the AC-AC converter 1b of this embodiment includes a first capacitor C1. The first capacitor C1 is connected between the third sub terminal 31 and the fourth sub terminal 32 of the second AC terminal 3. It is to be understood that the disclosure is not be limited to the disclosed embodiment.

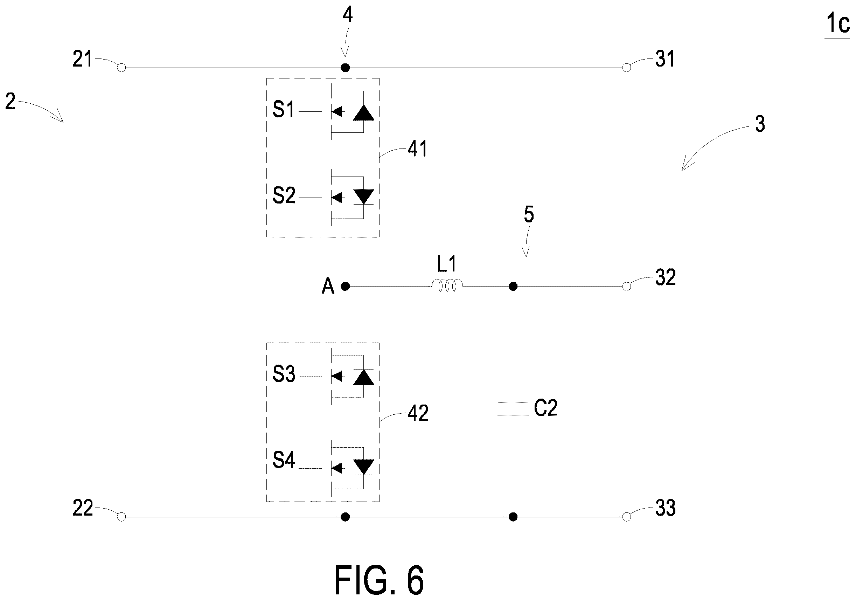

FIG. 6 is a schematic circuit view illustrating an AC-AC converter according to a fourth embodiment of the present disclosure. Compared with the AC-AC converter 1 of FIG. 1, as shown in FIG. 6, the second bridge arm 5 of the AC-AC converter 1c of this embodiment includes a second capacitor C2. The second capacitor C2 is connected between the fourth sub terminal 32 and the fifth sub terminal 33 of the second AC terminal 3. It is to be understood that the disclosure is not be limited to the disclosed embodiment.

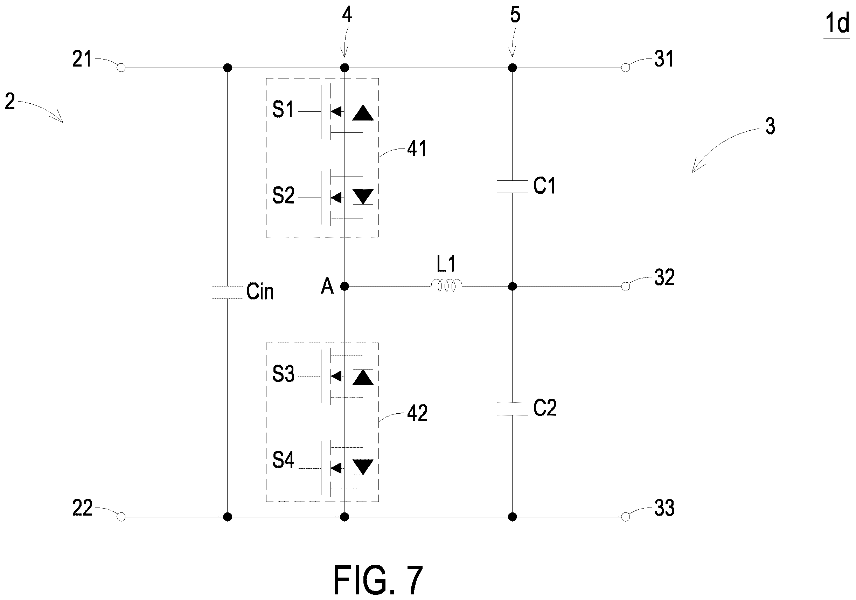

FIG. 7 is a schematic circuit view illustrating an AC-AC converter according to a fifth embodiment of the present disclosure. Compared with the AC-AC converter 1 of FIG. 1, as shown in FIG. 7, the AC-AC converter 1d of this embodiment further includes an input capacitor Cin. The input capacitor Cin is connected with the first bridge arm 4 in parallel. The input capacitor Cin is configured to filter the noise of switching high-frequency.

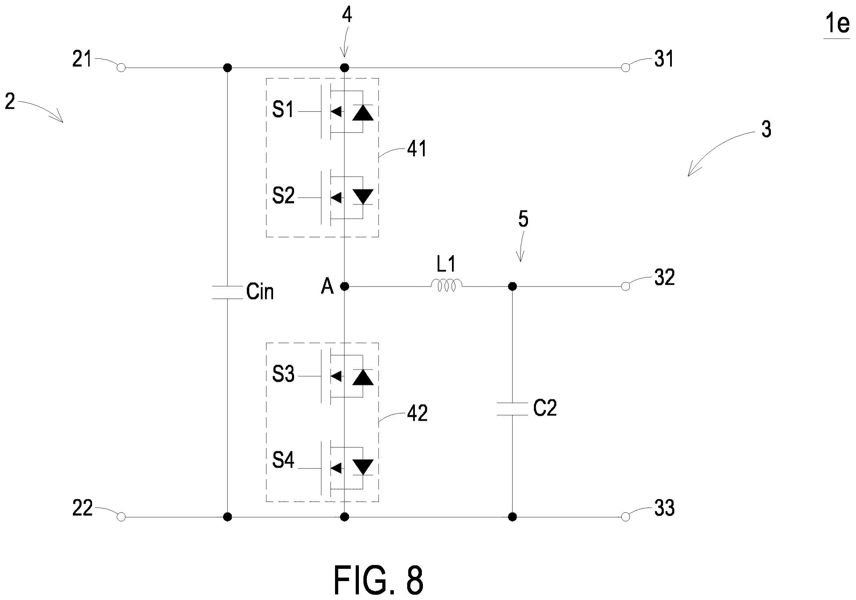

FIG. 8 is a schematic circuit view illustrating an AC-AC converter according to a sixth embodiment of the present disclosure. Compared with the AC-AC converter 1c of FIG. 6, as shown in FIG. 8, the AC-AC converter 1e of this embodiment further includes an input capacitor Cin. The input capacitor Cin is connected with the first bridge arm 4 in parallel. The input capacitor Cin is configured to filter the noise of switching high-frequency.

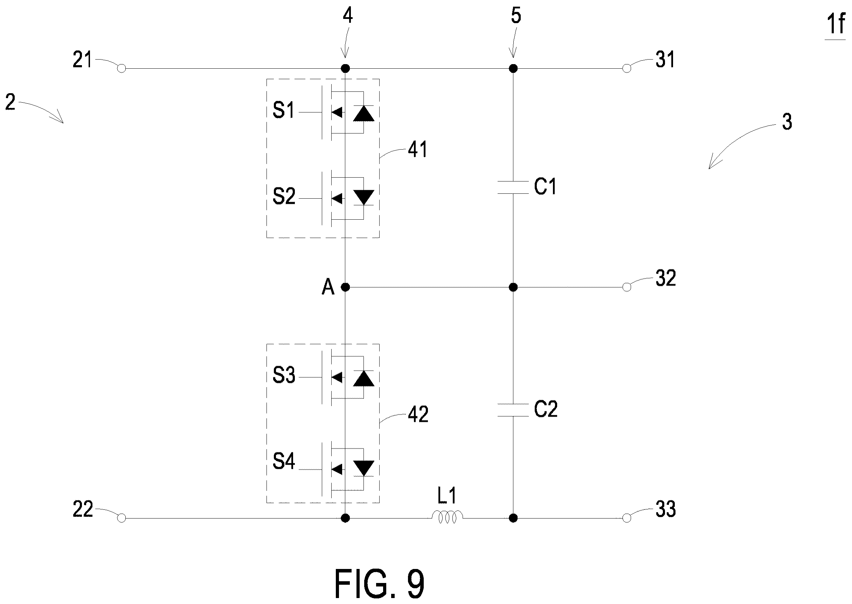

FIG. 9 is a schematic circuit view illustrating an AC-AC converter according to a seventh embodiment of the present disclosure. Compared with the first inductor L1 of the AC-AC converter 1 of FIG. 1, as shown in FIG. 9, the first inductor L1 of the AC-AC converter 1f of this embodiment is connected between the one end of the second switch assembly 42 and the fifth sub terminal 33 of the second AC terminal 3, and connected between the second sub terminal 22 of the first AC terminal 2 and the fifth sub terminal 33 of the second AC terminal 3.

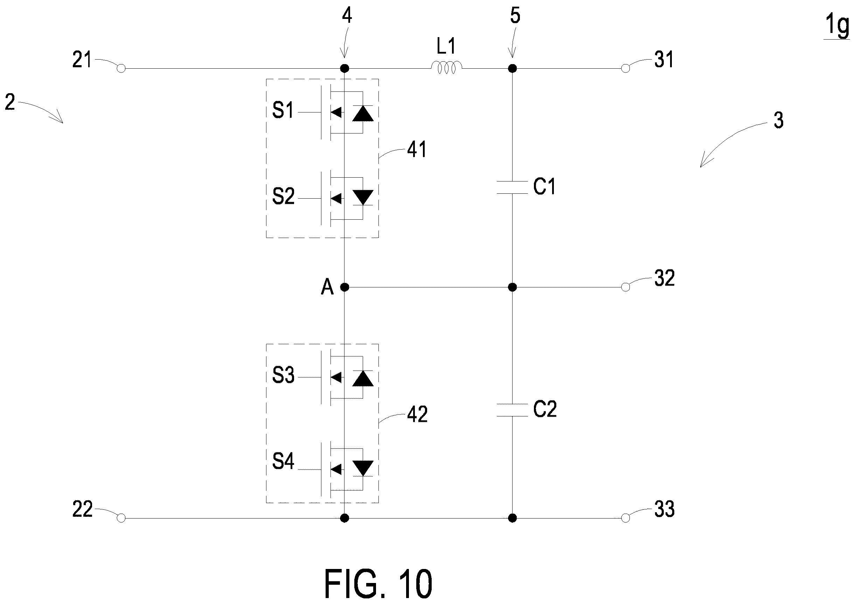

FIG. 10 is a schematic circuit view illustrating an AC-AC converter according to an eighth embodiment of the present disclosure. Compared with the first inductor L1 of the AC-AC converter 1 of FIG. 1, as shown in FIG. 10, the first inductor L1 of the AC-AC converter 1g of this embodiment is connected between the one end of the first switch assembly 41 and the third sub terminal 31 of the second AC terminal 3, and connected between the first sub terminal 21 of the first AC terminal 2 and the third sub terminal 31 of the second AC terminal 3.

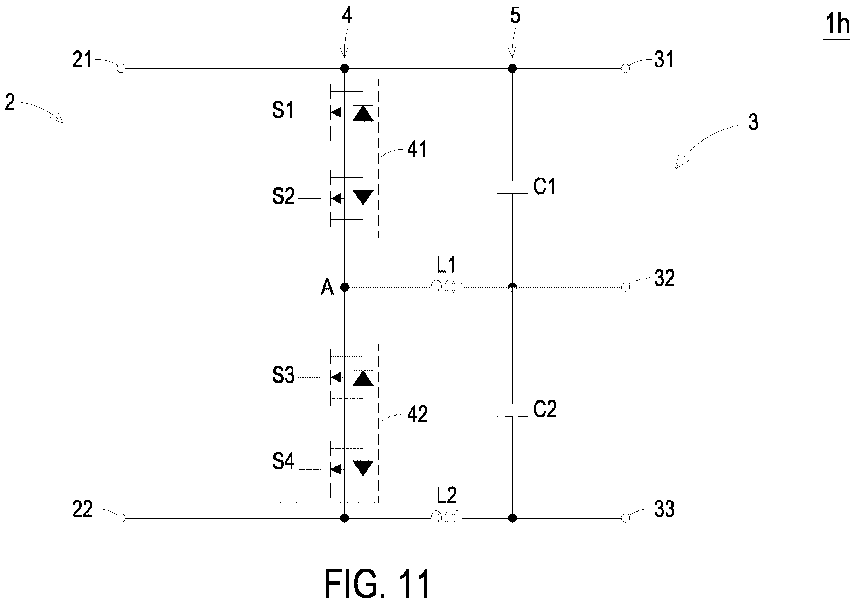

FIG. 11 is a schematic circuit view illustrating an AC-AC converter according to a ninth embodiment of the present disclosure. Compared with the AC-AC converter 1 of FIG. 1, as shown in FIG. 11, the AC-AC converter 1h of this embodiment further includes a second inductor L2. The second inductor L2 is connected between the one end of the second switch assembly 42 and the fifth sub terminal 33 of the second AC terminal 3, and connected between the second sub terminal 22 of the first AC terminal 2 and the fifth sub terminal 33 of the second AC terminal 3.

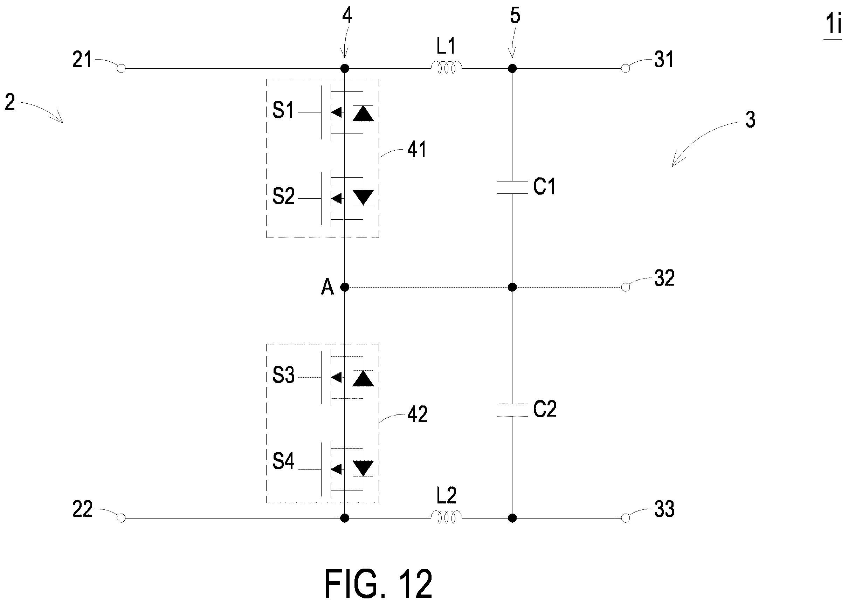

FIG. 12 is a schematic circuit view illustrating an AC-AC converter according to a tenth embodiment of the present disclosure. Compared with the first inductor L1 of the AC-AC converter 1 of FIG. 1, as shown in FIG. 12, the first inductor L1 of the AC-AC converter 1i of this embodiment is connected between the one end of the first switch assembly 41 and the third sub terminal 31 of the second AC terminal 3, and connected between the first sub terminal 21 of the first AC terminal 2 and the third sub terminal 31 of the second AC terminal 3. The AC-AC converter 1i of this embodiment further includes a second inductor L2. The second inductor L2 is connected between the one end of the second switch assembly 42 and the fifth sub terminal 33 of the second AC terminal 3, and connected between the second sub terminal 22 of the first AC terminal 2 and the fifth sub terminal 33 of the second AC terminal 3.

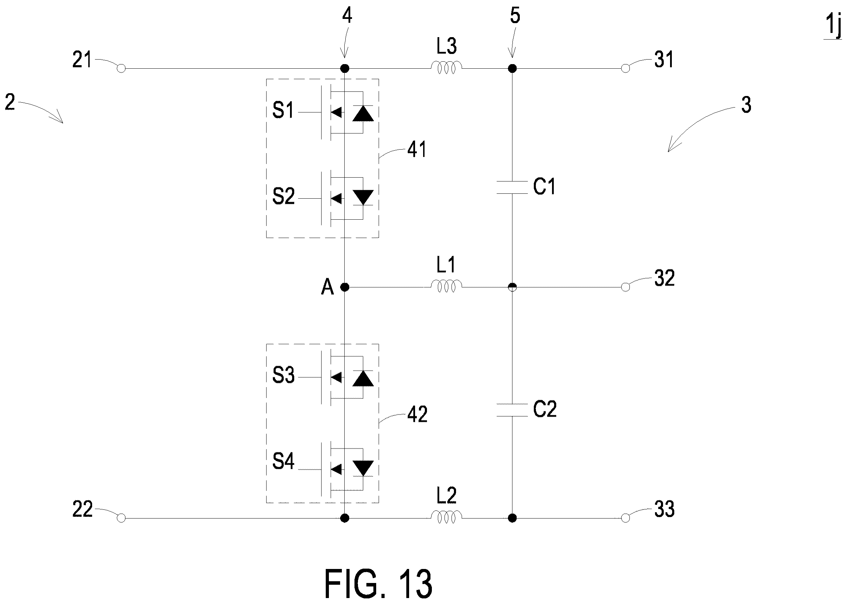

FIG. 13 is a schematic circuit view illustrating an AC-AC converter according to an eleventh embodiment of the present disclosure. Compared with the AC-AC converter 1 of FIG. 1, as shown in FIG. 13, the AC-AC converter 1j of this embodiment further includes a second inductor L2 and a third inductor L3. The second inductor L2 is connected between the one end of the second switch assembly 42 and the fifth sub terminal 33 of the second AC terminal 3, and connected between the second sub terminal 22 of the first AC terminal 2 and the fifth sub terminal 33 of the second AC terminal 3. The third inductor L3 is connected between the one end of the first switch assembly 41 and the third sub terminal 31 of the second AC terminal 3, and connected between the first sub terminal 21 of the first AC terminal 2 and the third sub terminal 31 of the second AC terminal 3.

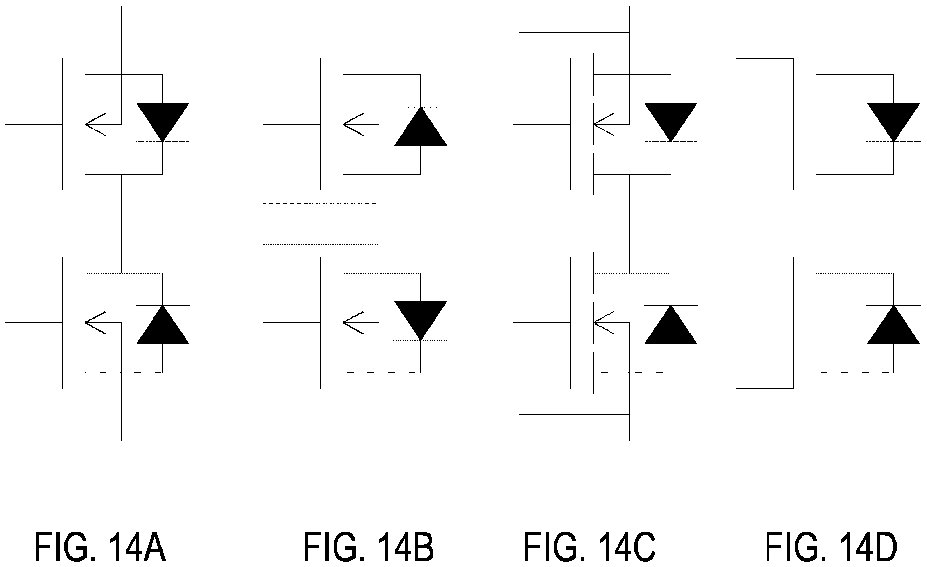

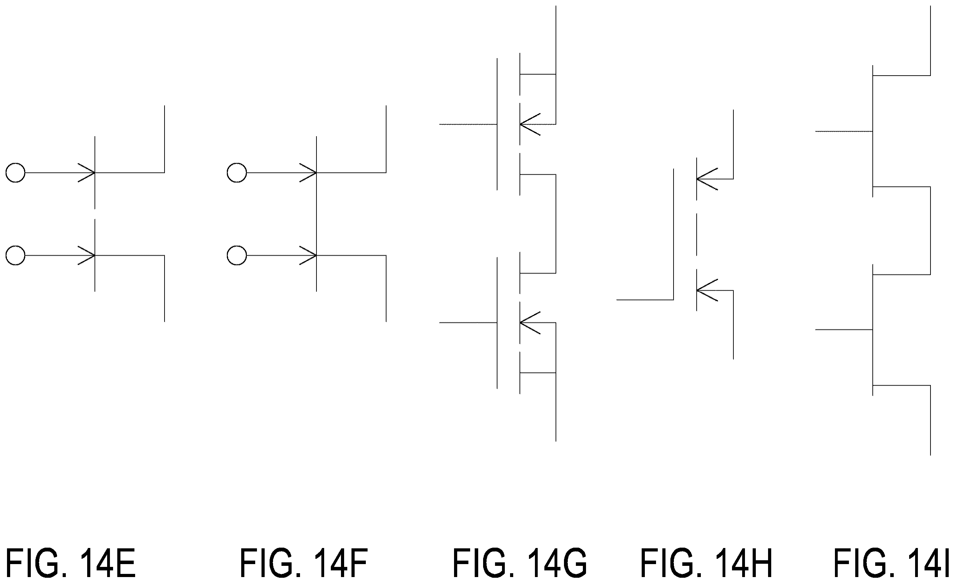

In some embodiments, the first switch S1, the second switch S2, the third switch S3 and the fourth switch S4 are formed by any types of switches. As shown in FIGS. 14A to 14I, two switches of the same switch assembly are formed by a directional switch, two unidirectional switches, parallel switches, series switches, bilateral switches, AC switches or fourquadrant switches.

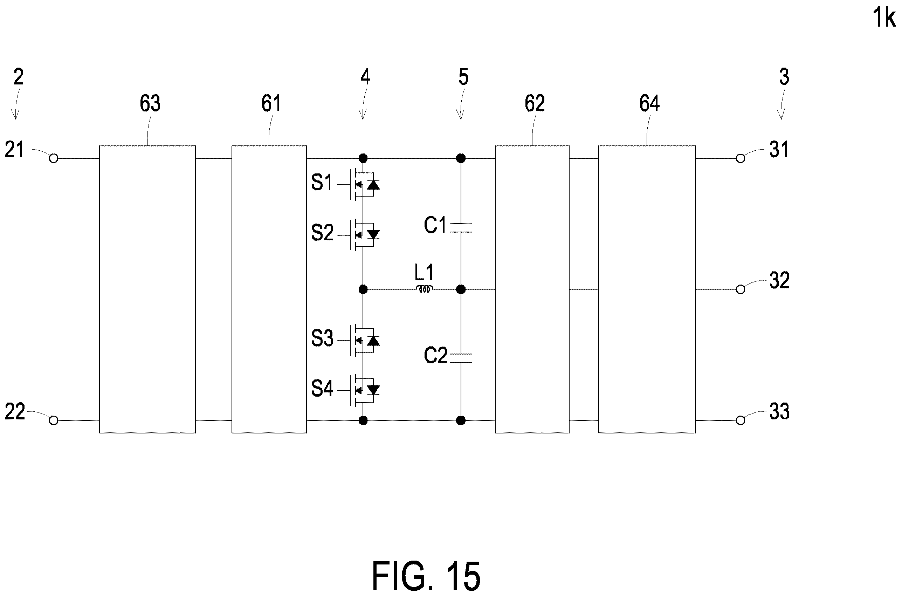

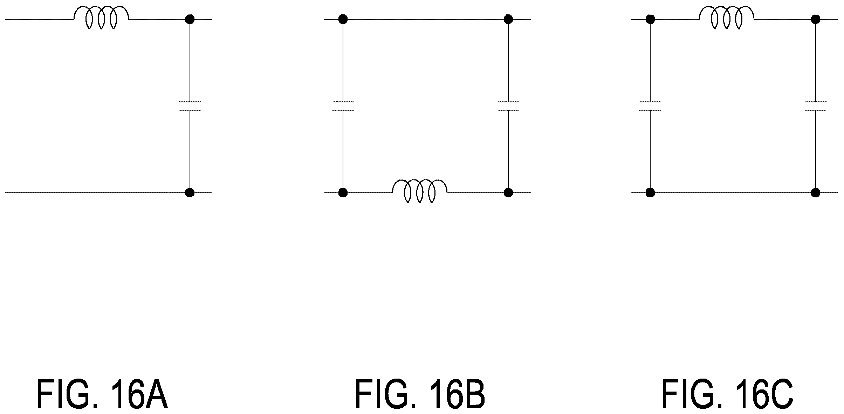

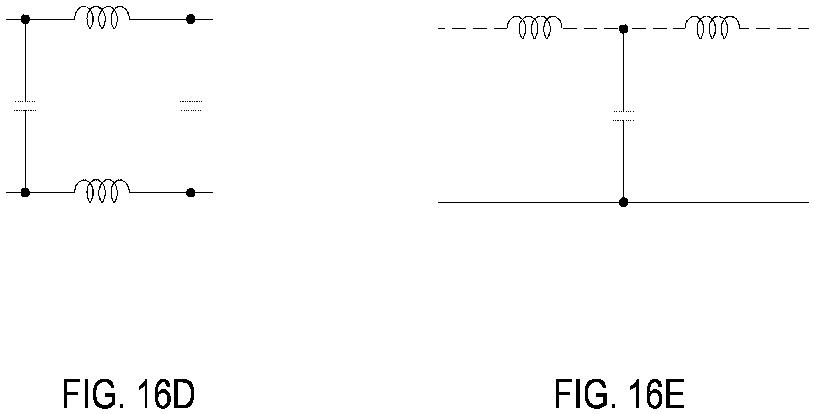

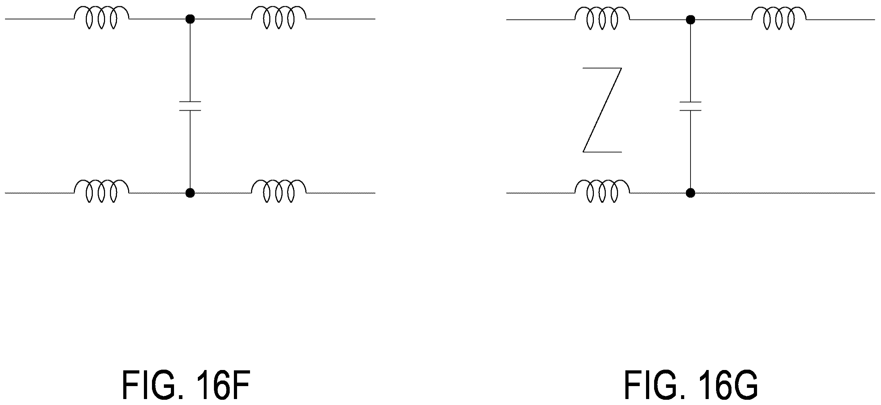

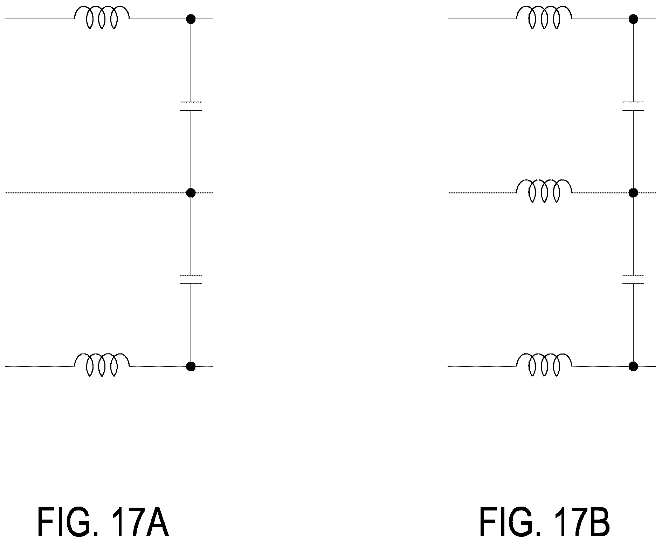

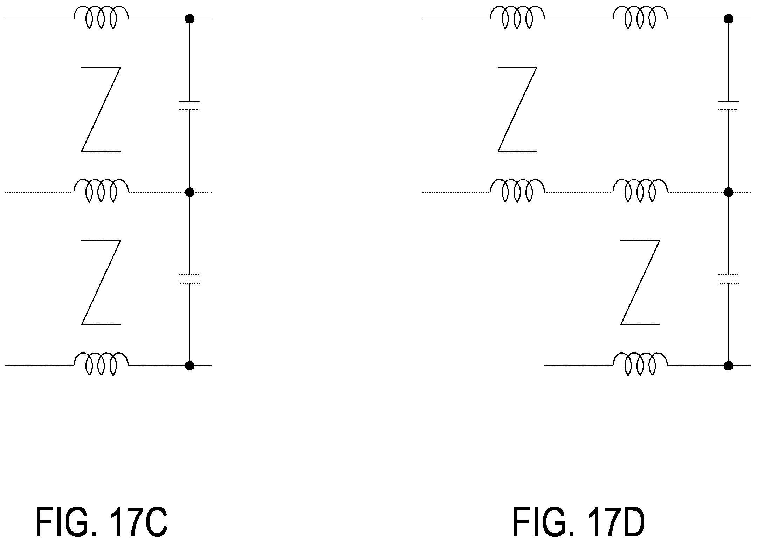

FIG. 15 is a schematic circuit view illustrating an AC-AC converter according to a twelfth embodiment of the present disclosure. Compared with the AC-AC converter 1 of FIG. 1, as shown in FIG. 15, the AC-AC converter 1k of this embodiment further includes a first filter 61, a second filter 62, a first protection device 63 and a second protection device 64. The first filter 61 and the second filter 62 are configured to suppress both conducted and radiated electromagnetic interference to comply with EMC standards. The first filter 61 is connected with the first sub terminal 21 and the second sub terminal 22 of the first AC terminal 2. The first filter 61 is formed by many combinations of inductor and capacitor, as shown in FIGS. 16A to 16G. The second filter 62 is connected with the third sub terminal 31, the fourth sub terminal 32 and the fifth sub terminal 33 of the second AC terminal 3. The second filter 62 is formed by many combinations of inductor and capacitor, as shown in FIGS. 17A to 17D. The first protection device 63 is connected between the first AC terminal 2 and the first filter 61. The second protection device 64 is connected between the second AC terminal 3 and the second filter 62. In some embodiments, the first protection device 63 and the second protection device 64 are any inrush and overvoltage protection devices, i.e., fuses, switches, prechargers, or surge protective devices (SPDs).

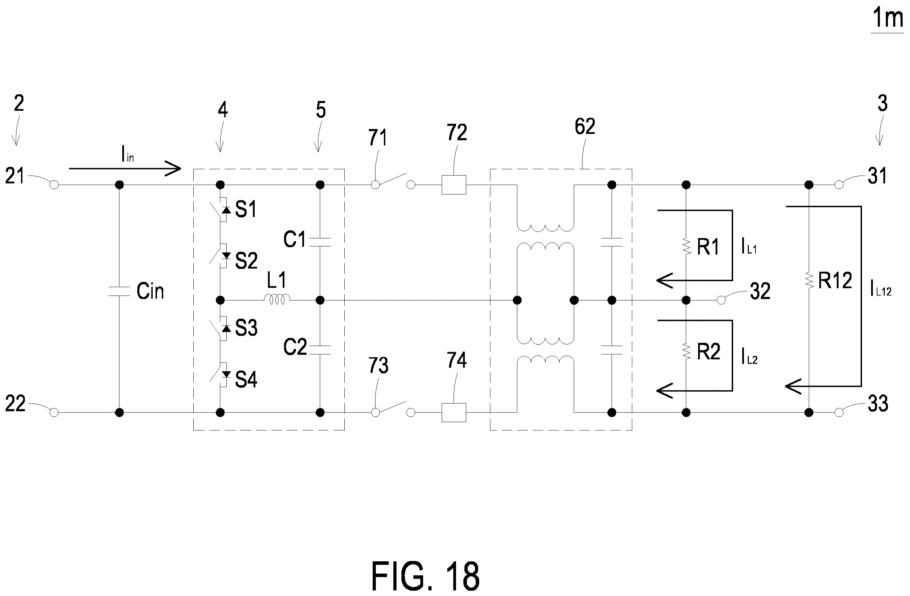

FIG. 18 is a schematic circuit view illustrating an AC-AC converter according to a thirteenth embodiment of the present disclosure. In this embodiment, the AC-AC converter 1m is a one-way converter from the first AC terminal 2 to the second terminal 3. Compared with the AC-AC converter 1 of FIG. 1, as shown in FIG. 18, the AC-AC converter 1m of this embodiment further includes an input capacitor Cin, a second filter 62, a first relay 71, a first current sensor 72, a second relay 73, a second current sensor 74, a first resistor R1, a second resistor R2 and a third resistor R12. The input capacitor Cin is connected with the first bridge arm 4 in parallel, and connected between the first sub terminal 21 and the second sub terminal 22 of the first AC terminal 2. The second filter 62 is connected with the third sub terminal 31, the fourth sub terminal 32 and the fifth sub terminal 33 of the second AC terminal 3. The second filter 62 is formed by many combinations of inductor and capacitor. For example, the second filter 62 is formed by a common-mode inductor. The first relay 71 and the first current sensor 72 are connected in series between the first sub terminal 21 of the first AC terminal 2 and one end of the second filter 62 for providing overload protection control. The second relay 73 and the second current sensor 74 are connected in series between the second sub terminal 22 of the first AC terminal 2 and the other end of the second filter 62 for providing overload protection control. The first resistor R1 is connected between the third sub terminal 31 and the fourth sub terminal 32 of the second AC terminal 3. The second resistor R2 is connected between the fourth sub terminal 32 and the fifth sub terminal 33 of the second AC terminal 3. The third resistor R12 is connected between the third sub terminal 31 and the fifth sub terminal 33 of the second AC terminal 3. The voltage of the third sub terminal 31 minus the voltage of the fourth sub terminal 32 is the voltage of the first resistor R1. The voltage of the fifth sub terminal 33 minus the voltage of the fourth sub terminal 32 is the voltage of the second resistor R2. In this embodiment, the current of the AC-AC converter 1m satisfies the following equation.

$$I_{in} = \frac{I_{L1} + I_{L2}}{2} + I_{L12}$$

$I_{in}$ represents the current of the first AC terminal 2. $I_{L1}$ represents the current of the first resistor R1. $I_{L2}$ represents the current of the second resistor R2. $I_{L12}$ represents the current of the third resistor R12.

In the present embodiment, it is required to select the component with an enhanced current tolerance. Moreover, since the AC-AC converter 1m of this embodiment include a one-way converter from the first AC terminal 2 to the second AC terminal 3, it might be necessary to ensure that the input power of 240V is applied first and then the first relay 71 and the second relay 73 are closed to supply the split-phase voltage to the first resistor R1, the second resistor R2 and the third resistor R12. Consequently, the AC-AC converter 1m of this embodiment might not fully replace an autotransformer for common wiring applications, and the usage conditions would be restricted accordingly.

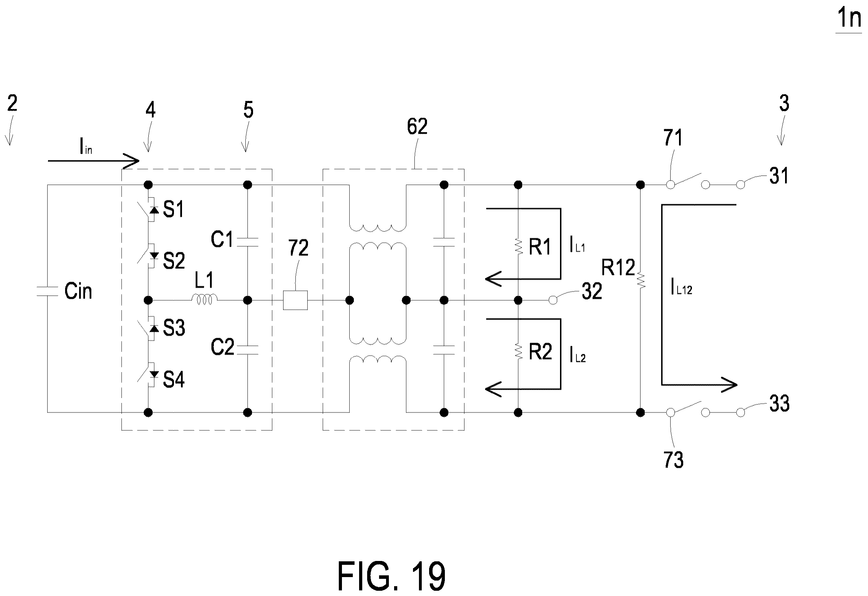

FIG. 19 is a schematic circuit view illustrating an AC-AC converter according to a fourteenth embodiment of the present disclosure. In this embodiment, the AC-AC converter 1n is a one-way converter from the second terminal 3 to the first AC terminal 2. Compared with the AC-AC converter 1 of FIG. 1, as shown in FIG. 19, the AC-AC converter 1n of this embodiment further includes an input capacitor Cin, a second filter 62, a first relay 71, a first current sensor 72, a second relay 73, a first resistor R1, a second resistor R2 and a third resistor R12. The input capacitor Cin is connected with the first bridge arm 4 in parallel, and connected between the first sub terminal 21 and the second sub terminal 22 of the first AC terminal 2. The second filter 62 is connected with the third sub terminal 31, the fourth sub terminal 32 and the fifth sub terminal 33 of the second AC terminal. The second filter 62 is formed by many combinations of inductor and capacitor. For example, the second filter 62 is formed by a transformer. The first relay 71 is connected between one end of the second filter 62 and the third sub terminal 31 of the second AC terminal 3. The second relay 73 is connected between the other end of the second filter 62 and the fifth sub terminal 33 of the second AC terminal 3. The first current sensor 72 is connected between a middle node of the second bridge arm 5 and a middle node of the second filter 62. The first resistor R1 is connected between the third sub terminal 31 and the fourth sub terminal 32 of the second AC terminal 3. The second resistor R2 is connected between the fourth sub terminal 32 and the fifth sub terminal 33 of the second AC terminal 3. The third resistor R12 is connected between the third sub terminal 31 and the fifth sub terminal 33 of the second AC terminal 3. In this embodiment, the current of the AC-AC converter 1n satisfies the following equation.

$$I_{in} = I_{L1} - I_{L2}$$

$I_{in}$ represents the current of the second AC terminal 3. $I_{L1}$ represents the current of the first resistor R1. $I_{L2}$ represents the current of the second resistor R2.

Before the first relay 71 and the second relay 73 are opened, the first switch S1, the second switch S2, the third switch S3 and the fourth switch S4 are activated through detection and controlling. When the first relay 71 and the second relay 73 receives the input power of 240V, the split-phase voltage of the first resistor R1 and the second resistor R2 of 120 V is immediately regulated and simultaneously supplied to household split-phase loads. The AC-AC converter 1n of this embodiment fully replace an autotransformer for common wiring applications. Moreover, the circuit components of this embodiment can carry the currents of the first resistor R1 and the second resistor R2, i.e., $I_{L1}$ - $I_{L2}$, and the current of the third resistor R12 does not flow into the component. Consequently, the current tolerance requirements of the components are significantly reduced.

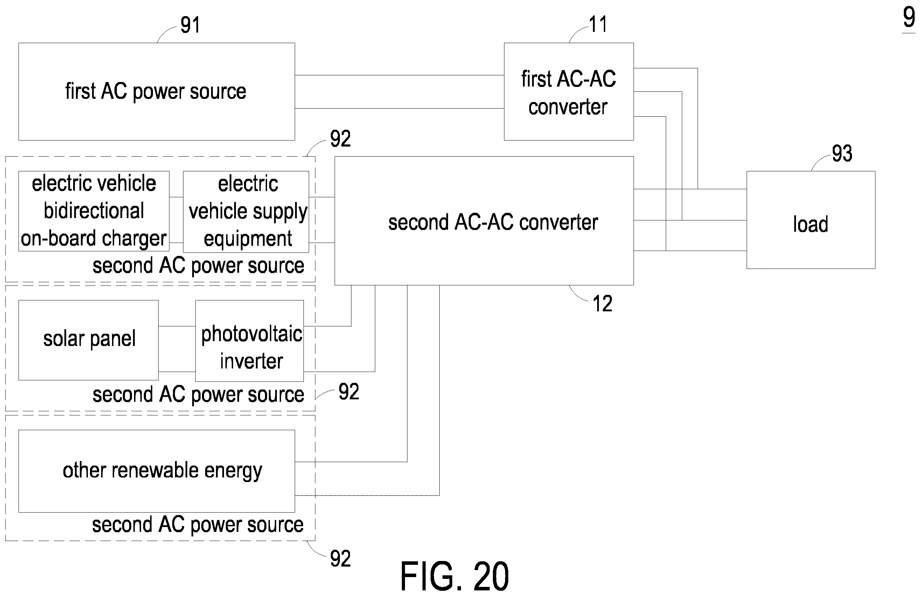

FIG. 20 is a schematic circuit view illustrating a power supply system of the present disclosure. As shown in FIG. 20, the power supply system 9 of this embodiment includes a first AC power source 91, a plurality of second AC power sources 92, a load 93, a first AC-AC converter 11, and a second AC-AC converter 12. The first AC power source 91 may be a power grid and include two wires for providing an input power. The plurality of second AC power sources 92 are combination of an electric vehicle bidirectional on-board charger and an electric vehicle supply equipment, combination of a solar panel and a photovoltaic inverter, or other renewable energy. The load 93 may be a home appliance and include three wires for perceiving a main output power. The first AC-AC converter 11 is connected between the first AC power source 91 and the load 93. One end of the second AC-AC converter 12 is connected with the plurality of second AC power sources 92, and the other end of the second AC-AC converter 12 is connected with the load 93. In an embodiment, when the first AC power source 91 is working, the first AC-AC converter 11 converts the input power of the first AC power source 91 to the main output power. When the first AC power source 91 is failure, at least one of the plurality of second AC power sources 92 provides the input power to the second AC-AC converter 12, and the second AC-AC converter 12 converts the input power of at least one of the plurality of second AC power sources 92 to the main output power. The switching of the power sources are controlled by a micro grid interconnect device, an automatic transfer switch, or any switching control circuit.

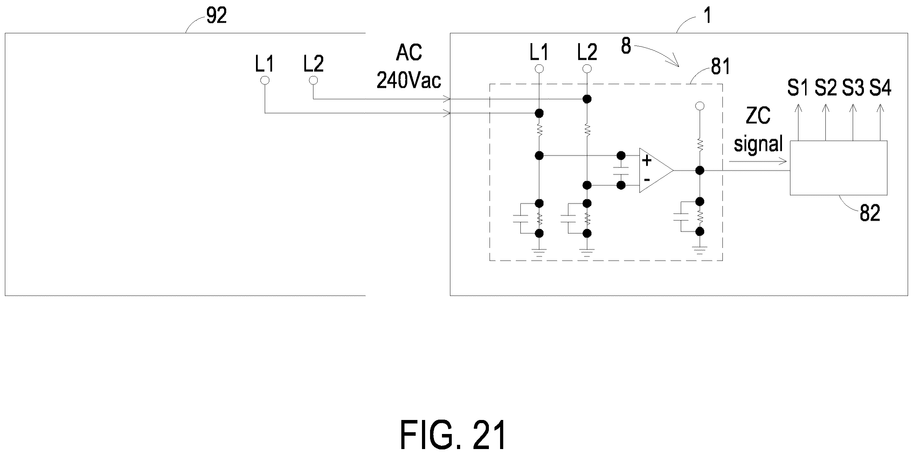

In some embodiments, the signals driving the first switch S1, the second switch S2, the third switch S3 and the fourth switch S4 are generated by a signal generation device. FIG. 21 is a schematic circuit view illustrating the signal generation device of the power supply system of an embodiment of the present disclosure. As shown in FIG. 21, the signal generation device 8 is disposed in the AC-AC converter 1. The signal generation device 8 includes a detection circuit 81 and a signal generator 82. The detection circuit 81 receives and converts the input power with AC voltage of 240V of the first AC power source 91 or the second AC power source 92 to a zero-cross signal in phase with the AC voltage. The detection circuit 81 at least includes a comparator, a plurality of resistors and a plurality of capacitors. The signal generator 82 generates a plurality of control signals to the first switch S1, the second switch S2, the third switch S3 and the fourth switch S4 according to the zero-cross signal. In this embodiment, the AC-AC converter 1 and the first AC power source 91 (or the second AC power source 92) are connected with a wire for transmitting the input power with AC voltage of 240V.

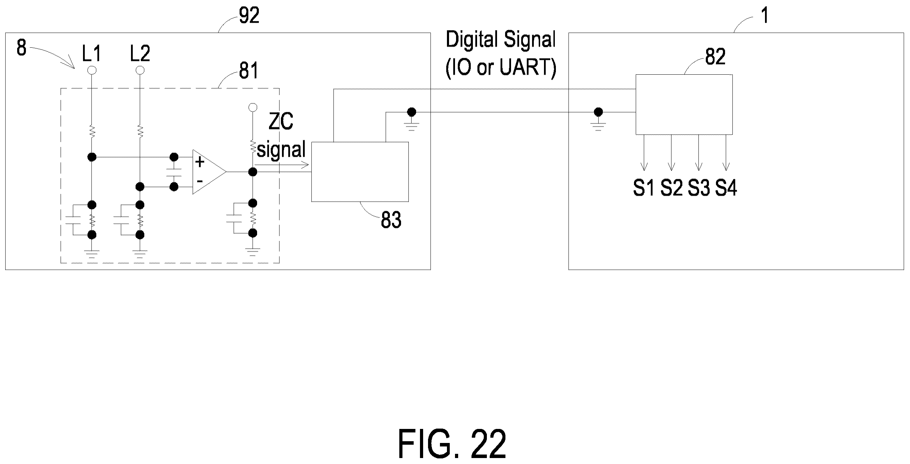

FIG. 22 is a schematic circuit view illustrating the signal generation device of the power supply system of another embodiment of the present disclosure. As shown in FIG. 22, the signal generation device 8 is disposed in the first AC power source 91 (or the second AC power source 92) and the AC-AC converter 1. The signal generation device 8 includes a detection circuit 81, a signal generator 82 and a microcontroller unit (MCU) 83. The detection circuit 81 and the microcontroller unit 83 are disposed in the first AC power source 91 (or the second AC power source 92). The detection circuit 81 receives and converts the input power with AC voltage of 240V to a zero-cross signal in phase with the AC voltage. The detection circuit 81 at least includes a comparator, a plurality of resistors and a plurality of capacitors. The microcontroller unit 83 receives and converts the zero-cross signal to a digital signal. The signal generator 82 is disposed in the AC-AC converter 1. The signal generator 82 generates a plurality of control signals to the first switch S1, the second switch S2, the third switch S3 and the fourth switch S4 according to the digital signal. In this embodiment, the AC-AC converter 1 and the first AC power source 91 (or the second AC power source 92) are connected with a wire for transmitting the digital signal. The wire might require a low voltage amplitude (e.g., 5V or 3.3V) for addressing the consideration of insulation withstand voltage.

From the above description, the AC-AC converter and the power supply system are disclosed. The AC-AC converter of the present disclosure includes a first AC terminal with two sub terminals, a second AC terminal with three sub terminals, and a first bridge arm with two switch assemblies. The AC-AC converter receives and converts the input power between two wires and three wires. The two switch assemblies are activated, and bidirectional power flow is allowed. The two switch assemblies are performed as a voltage source for supporting both balanced and unbalanced loads. Both active and reactive power are also supported. Moreover, the AC-AC converter of the present disclosure has the advantages of reducing weight, size and cost, and enhancing conversion efficiency.

## Claims

1. An AC-AC converter (1, 1a, 1b, 1c, 1d, 1e, 1f, 1g, 1h, 1i, 1j, 1m, 1n), **characterized by** comprising:

   a first AC terminal (2) configured to receive an input power and comprising a first sub terminal (21) and a second sub terminal (22);
   a second AC terminal (3) comprising a third sub terminal (31), a fourth sub terminal (32) and a fifth sub terminal (33), wherein the third sub terminal (31) is connected with the first sub terminal (21), the fifth sub terminal (33) is connected with the second sub terminal (22);
   a first bridge arm (4) connected between the first sub terminal (21) and the second sub terminal (22) and comprising a first switch assembly (41) and a second switch assembly (42), wherein a connection node (A) is formed between the first switch assembly (41) and the second switch assembly (42), and the connection node (A) is connected with the fourth sub terminal (32);
   a second bridge arm (5) comprising at least one capacitor (C1, C2) connected with the fourth sub terminal (32); and
   at least one inductor (L1, L2, L3), wherein one end of the at least one inductor (L1, L2, L3) is connected with at least one of the first switch assembly (41) and the second switch assembly (42), and the other end of the at least one inductor (L1, L2, L3) is connected with at least one of the third sub terminal (31), the fourth sub terminal (32) and the fifth sub terminal (33), wherein a first output power is formed between the third sub terminal (31) and the fourth sub terminal (32), and a second output power is formed between the fourth sub terminal (32) and the fifth sub terminal (33).

2. The AC-AC converter (1b, 1c, 1e) according to claim 1, wherein the at least one capacitor (C1, C2) comprises a single capacitor (C1, C2) connected between the third sub terminal (31) and the fourth sub terminal (32), or connected between the fourth sub terminal (32) and the fifth sub terminal (33).

3. The AC-AC converter (1b, 1c, 1e) according to claim 1 or 2, wherein the at least one inductor (L1) is connected between the connection node (A) and the fourth sub terminal (32).

4. The AC-AC converter (1, 1a, 1d, 1f, 1g, 1h, 1i, 1j, 1m, 1n) according to claim 1, wherein the at least one capacitor (C1, C2) comprises two capacitors (C1, C2), wherein one of the two capacitors (C1, C2) is connected between the third sub terminal (31) and the fourth sub terminal (32), and the other one of the two capacitors (C1, C2) is connected between the fourth sub terminal (32) and the fifth sub terminal (33).

5. The AC-AC converter (1, 1a, 1d, 1f, 1g, 1h, 1i, 1j, 1m, 1n) according to claim 4, wherein the at least one inductor (L1, L2, L3) connected between the connection node (A) and the fourth sub terminal (32), connected between one end of the first switch assembly (41) and the third sub terminal (31), and/or connected between one end of the second switch assembly (42) and the fifth sub terminal (33).

6. The AC-AC converter (1, 1a, 1b, 1c, 1d, 1e, 1f, 1g, 1h, 1i, 1j, 1m, 1n) according to any one of the previous claims, wherein the first switch assembly (41) comprises a first switch (S1) and a second switch (S2) connected in series, the second switch assembly (42) comprises a third switch (S3) and a fourth switch (S4) connected in series.

7. The AC-AC converter (1, 1a, 1b, 1c, 1d, 1e, 1f, 1g, 1h, 1i, 1j, 1m, 1n) according to claim 6, wherein a gate terminal of the first switch (S1) and a gate terminal of the second switch (S2) are connected with each other to form a first bidirectional switch, and a gate terminal of the third switch (S3) and a gate terminal of the fourth switch (S4) are connected with each other to form a second bidirectional switch.

8. The AC-AC converter (1, 1a, 1b, 1c, 1d, 1e, 1f, 1g, 1h, 1i, 1j, 1m, 1n) according to any one of the previous claims, wherein the first output power and the second output power are half of the input power, respectively.

9. The AC-AC converter (1, 1a, 1b, 1c, 1d, 1e, 1f, 1g, 1h, 1i, 1j, 1m, 1n) according to any one of the previous claims, wherein the AC-AC converter (1, 1a, 1b, 1c, 1d, 1e, 1f, 1g, 1h, 1i, 1j, 1m, 1n) comprises a first filter (61) and a second filter (62), the first filter (61) is connected with the first sub terminal (21) and the second sub terminal (22) of the first AC terminal (2), and the second filter (62) is connected with the third sub terminal (31), the fourth sub terminal (32) and the fifth sub terminal (33) of the second AC terminal (3).

10. The AC-AC converter (1, 1a, 1b, 1c, 1d, 1e, 1f, 1g, 1h, 1i, 1j, 1m, 1n) according to claim 9, wherein the AC-AC converter (1, 1a, 1b, 1c, 1d, 1e, 1f, 1g, 1h, 1i, 1j, 1m, 1n) comprises a first protection device (63) and a second protection device (64), the first protection device (63) is connected between the first AC terminal (2) and the first filter (61), and the second protection device (64) is connected between the second AC terminal (3) and the second filter (62).

11. The AC-AC converter (1, 1a, 1b, 1c, 1d, 1e, 1f, 1g, 1h, 1i, 1j, 1m, 1n) according to any one of claims 6 to 10, further comprising a controller configured to provide a first signal to control the first switch (S1), a second signal to control the second switch (S2), a third signal to control the third switch (S3), and a fourth signal to control the fourth switch (S4), wherein during a positive half-cycle, the first signal is complementary to the third signal, the second signal and the fourth signal are positive, and during a negative half-cycle, the second signal is complementary to the fourth signal, the first signal and the third signal are positive.

12. The AC-AC converter (1, 1a, 1b, 1c, 1d, 1e, 1f, 1g, 1h, 1i, 1j, 1m, 1n) according to any one of claims 6 to 10, further comprising a controller configured to provide a first signal to control the first switch (S1) and the second switch (S2) and a second signal to control the third switch (S3) and the fourth switch (S4), wherein the first signal is complementary to the second signal.

13. The AC-AC converter (1, 1a, 1b, 1c, 1d, 1e, 1f, 1g, 1h, 1i, 1j, 1m, 1n) according to any one of the previous claims, wherein a third output power is formed between the third sub terminal (31) and the fifth sub terminal (33).

14. A power supply system (9), **characterized by** comprising:

an AC power source (91, 92) providing an input power and comprising two first wires;
a load (93) receiving a main output power and comprising three second wires; and
an AC-AC converter (1, 1a, 1b, 1c, 1d, 1e, 1f, 1g, 1h, 1i, 1j, 1m, 1n) connected between the AC power source (91, 92) and the load (93), converting the input power of the AC power source (91, 92) to the main output power of the load (93), and comprising:

a first AC terminal (2) configured to receive the input power and comprising a first sub terminal (21) and a second sub terminal (22), wherein the first sub terminal (21) and the second terminal are connected with the two first wires of the AC power source (91, 92), respectively;
a second AC terminal (3) comprising a third sub terminal (31), a fourth sub terminal (32) and a fifth sub terminal (33), wherein the third sub terminal (31) is connected with the first sub terminal (21), the fifth sub terminal (33) is connected with the second sub terminal (22), the third sub terminal (31), the fourth sub terminal (32) and the fifth sub terminal (33) are connected with the three second wires of the load (93), respectively, a first output power is formed between the third sub terminal (31) and the fourth sub terminal (32), a second output power is formed between the fourth sub terminal (32) and the fifth sub terminal (33), and the main output power is formed by the first output power and the second output power collaboratively;
a first bridge arm (4) connected between the first sub terminal (21) and the second sub terminal (22) and comprising a first switch assembly (41) and a second switch assembly (42), wherein a connection node (A) is formed between the first switch assembly (41) and the second switch assembly (42), and the connection node (A) is connected with the fourth sub terminal (32);
a second bridge arm (5) comprising at least one capacitor (C1, C2) connected with the fourth sub terminal (32); and
at least one inductor (L1, L2, L3), wherein one end of the at least one inductor (L1, L2, L3) is connected with at least one of the first switch assembly (41) and the second switch assembly (42), and the other end of the at least one inductor (L1, L2, L3) is connected with at least one of the third sub terminal (31), the fourth sub terminal (32) and the fifth sub terminal (33).

**15.** The power supply system (9) according to claim 14, wherein the power supply system (9) comprises a signal generation device (8) disposed in the AC power source (91, 92) or the AC-AC converter (1, 1a, 1b, 1c, 1d, 1e, 1f, 1g, 1h, 1i, 1j, 1m, 1n), the signal generation device (8) comprises a detection circuit (81) and a signal generator (82), the detection circuit (81) receives and converts the input power to a zero-cross signal (ZC), and the signal generator (82) generates a plurality of control signals to the first switch assembly (41) and the second switch assembly (42) according to the zero-cross signal (ZC).

FIG. 1

EP 4 718 703 A1

FIG. 2

FIG. 3

FIG. 4

EP 4 718 703 A1

FIG. 5

EP 4 718 703 A1

FIG. 6

FIG. 7

1e

3

31

32

33

5

C2

L1

41

42

4

A

S1

S2

S3

S4

Cin

21

22

2

FIG. 8

FIG. 9

FIG. 10

EP 4 718 703 A1

FIG. 11

EP 4 718 703 A1

FIG. 12

FIG. 13

EP 4 718 703 A1

FIG. 14A

FIG. 14B

FIG. 14C

FIG. 14D

FIG. 14E  FIG. 14F  FIG. 14G  FIG. 14H  FIG. 14I

FIG. 15

EP 4 718 703 A1

FIG. 16A

FIG. 16B

FIG. 16C

FIG. 16E

FIG. 16D

EP 4 718 703 A1

FIG. 16F

FIG. 16G

FIG. 17B

FIG. 17A

EP 4 718 703 A1

FIG. 17C

FIG. 17D

**FIG. 18**

EP 4 718 703 A1

FIG. 19

EP 4 718 703 A1

FIG. 20

EP 4 718 703 A1

FIG. 21

EP 4 718 703 A1

FIG. 22

Europäisches
Patentamt
European
Patent Office
Office européen
des brevets

## EUROPEAN SEARCH REPORT

**Application Number**

EP 25 20 4678

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 667 668 A (AFORE NEW ENERGY TECH SHANGHAI CO LTD) 29 August 2023 (2023-08-29) * paragraphs [0009], [0010]; figures 1,3,5 * | 1-15 | INV. H02M5/275 H02M5/293 H02M1/04 H02M1/08 H02M1/12 |
| X | US 2021/408938 A1 (FENG NINGBO [CN] ET AL) 30 December 2021 (2021-12-30) * paragraphs [0028] - [0031]; figures 2,3,4 * * paragraphs [0052], [0060] * | 1-15 | |
| X | US 11 973 419 B2 (SIGNIFY HOLDING BV [NL]) 30 April 2024 (2024-04-30) * columns 5-6; figure 1 * | 1 | |
| A | US 9 787 208 B2 (AVO MULTI-AMP CORP [US]) 10 October 2017 (2017-10-10) * abstract; figure 2 * | 2 | |

**TECHNICAL FIELDS SEARCHED (IPC)**

H02M

The present search report has been drawn up for all claims

| Place of search | Date of completion of the search | Examiner |
|---|---|---|
| The Hague | 19 January 2026 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 4678

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | | Publication date | Patent family member(s) | | Publication date |
|---|---|---|---|---|---|
| CN 116667668 | A | 29-08-2023 | NONE | | |
| US 2021408938 | A1 | 30-12-2021 | CN | 110323955 A | 11-10-2019 |
| | | | EP | 3905509 A1 | 03-11-2021 |
| | | | US | 2021408938 A1 | 30-12-2021 |
| | | | WO | 2020248651 A1 | 17-12-2020 |
| US 11973419 | B2 | 30-04-2024 | CN | 114600365 A | 07-06-2022 |
| | | | EP | 4049364 A1 | 31-08-2022 |
| | | | JP | 2022553339 A | 22-12-2022 |
| | | | US | 2022407412 A1 | 22-12-2022 |
| | | | WO | 2021078532 A1 | 29-04-2021 |
| US 9787208 | B2 | 10-10-2017 | EP | 2904412 A1 | 12-08-2015 |
| | | | US | 2015280596 A1 | 01-10-2015 |
| | | | WO | 2014062675 A1 | 24-04-2014 |

EPO FORM P0459

For more details about this annex : see Official Journal of the European Patent Office, No. 12/82